Europäisches Patentamt

European Patent Office

Office européen des brevets

(11) Veröffentlichungsnummer: **0 313 545**
A1

## (12) EUROPÄISCHE PATENTANMELDUNG

(21) Anmeldenummer: 88890247.5

(22) Anmeldetag: 26.09.88

(51) Int.Cl.4: **B 23 D 61/12**
**B 27 G 19/10**

(30) Priorität: 22.10.87 AT 2799/87

(43) Veröffentlichungstag der Anmeldung:
26.04.89 Patentblatt 89/17

(84) Benannte Vertragsstaaten: AT DE FR GB IT

(71) Anmelder: Rozsa, Sandor Janos
Kaiserstrasse 89
A-1070 Wien (AT)

Balint, Ida
Kaiserstrasse 89
A-1070 Wien (AT)

SHINTO INDUSTRIAL CO., LTD.
39, Tomoe, Bessho-cho
Miki-City Hyogo Pref. (JP)

(72) Erfinder: Rozsa, Sandor Janos
Kaiserstrasse 89
A-1070 Wien (AT)

Balint, Ida
Kaiserstrasse 89
A-1070 Wien (AT)

(74) Vertreter: Müllner, Erwin, Dr. et al
Patentanwälte Dr. Erwin Müllner Dipl.-Ing. Werner
Katschinka Postfach 159 Weihburggasse 9
A-1010 Wien (AT)

(54) Stichsägeblatt.

(57) Ein Stichsägeblatt soll so ausgebildet werden, daß damit
ein sauberer Schnitt erzielt werden kann, d.h. die Schnittkanten
sollen unbeschädigt sein. Dies wird erreicht, indem ein
Stichsägeblatt (1) einen Bereich (3) hat, in dem die Schnittrichtung (6) der Zähne (5) zum Schaft (4) weist, wie dies allgemein
üblich ist. Zusätzlich sind jedoch im Bereich (7) beim Schaft (4)
Zähne (8) mit entgegengesetzter Schnittrichtung (9) vorgesehen. Diese Zähne (8) können in Vorschubrichtung (12) vor oder
hinter den anderen Zähnen (5) liegen.

Fig. 1

# Beschreibung

## Stichsägeblatt

Die Erfindung betrifft ein Stichsägeblatt mit Schneidezähnen, deren Schnittrichtung zum Schaft des Sägeblattes weist.

Stichsägeblätter dieser Art haben weite Verbreitung gefunden. Sie werden mit ihrem Schaft in die Stichsäge eingespannt, sodaß sie durch eine Öffnung der Auflageplatte der Stichsäge hindurchgehen. Die Stichsäge wird mit ihrer Auflageplatte auf das zu schneidende Werkstück (z.B. eine Holzplatte) aufgesetzt und das Stichsägeblatt im wesentlichen in eine Aufundabbewegung versetzt. Geschnitten wird dabei hauptsächlich bei der Aufwärtsbewegung, d.h. wenn sich das Stichsägeblatt in Richtung seines Schaftes bewegt.

Der Nachteil besteht darin, daß die Seite des Werkstückes, auf der die Auflageplatte liegt, bei Holz durch das Stichsägeblatt ausbricht bzw. teilweise absplittert, bzw. daß sich bei Metallen ein Grat bildet.

Es ist Aufgabe der vorliegenden Erfindung, diesen Nachteil zu beseitigen.

Diese Aufgabe wird erfindungsgemäß dadurch gelöst, daß im Bereich des schaftseitigen Endes des Sägeblattes zusätzlich ein oder mehrere Schneidezähne mit entgegengesetzter Schnittrichtung vorgesehen sind.

Auf diese Weise wird erreicht, daß die Schnittrichtung von jeder der beiden Oberflächen des Werkstückes ins Innere gerichtet ist, sodaß sich bei Metallen kein Grat ausbilden kann und bei Holz die Kanten nicht absplitern. Das umständliche Arbeiten auf der Rückseite des Werkstückes, wie es bisher notwendig war, um ein sauberes Schnittbild zu erhalten, wird ausgeschaltet.

Zur Erzielung hoher Vorschubgeschwindigkeiten kann es zweckmäßig sein, eine Stichsäge zu verwenden, die das Sägeblatt nicht in einer Stellung exakt 90° zur Vorschubrichtung auf und ab bewegt, sondern die die Stellung des Sägeblattes bei der Aufwärts- und bei der Abwärtsbewegung jeweils ändert, sodaß der Winkel zwischen der Vorschubrichtung und der momentanen Bewegungsrichtung des Sägeblattes stets mehr als 90° beträgt

Zweckmäßige Ausführungsformen der Erfindung sind dadurch gekennzeichnet,daß die Schneidezähne, deren Schnittrichtung zum schaftseitigen Ende des Sägeblattes weist, in bezug auf die in Vorschubrichtung des Sägeblattes weiter hinten oder weiter vorne als die Zähne mit entgegengesetzter Schnittrichtung liegen.

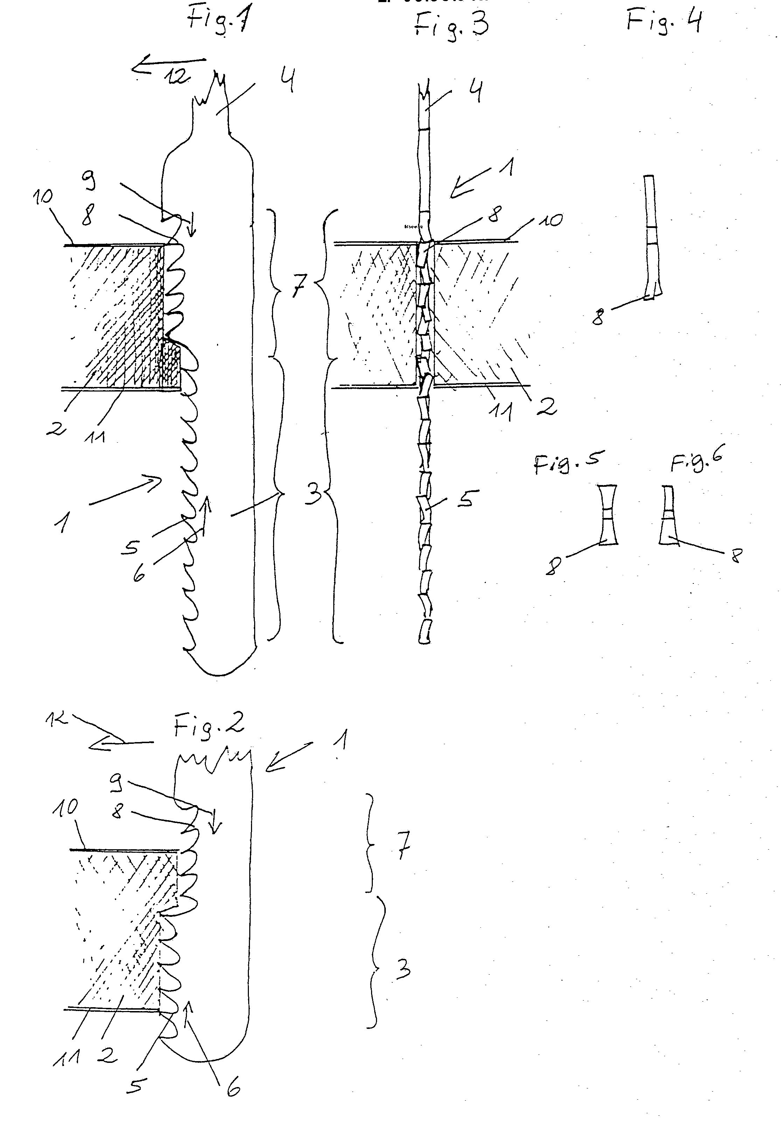

Anhand der beiliegenden Zeichnungen wird die Erfindung näher erläutert. Es zeigt: Fig. 1 eine Ausführungsform eines erfindungsgemäßen Sägeblattes in Seitenansicht; Fig. 2 eine andere Ausführungsform in Teilseitenansicht; Fig. 3 das Sägeblatt von Fig. 1 in Richtung auf die Schneidezähne; Fig. 4 einen Querschnitt des Sägeblattes von Fig. 1; und Fig. 5 und 6 andere Ausbildungen des Querschnitts.

Fig. 1 und 3 zeigen ein Sägeblatt 1 während des Sägens einer Preßspanplatte 2. Das Sägeblatt hat in dem Bereich 3, der dem Schaft 4 abgewendet ist, Zähne 5, deren Schnittrichtung 6 wie bei herkömmlichen Sägeblättern zum Schaft 4 weist. Zusätzlich sind jedoch im Bereich 7, der an den Schaft 4 angrenzt, Schneidezähne 8 vorgesehen, deren Schnittrichtung 9 vom Schaft weg weist. Auf diese Weise wird sowohl die obere Oberfläche 10 als auch die untere Oberfläche 11 der Preßspanplatte, die beide hart sind, bei der Bewegung des Sägeblattes 1 in Richtung Inneres geschnitten, sodaß die Schnittränder auf beiden Oberflächen 10, 11 höchst exakt sind. Im Inneren der Preßspanplatte, das nur locker gefüllt ist, bereitet das Sägen keinerlei Probleme.

Gemäß Fig. 1 sind die Zähne 5 in Vorschubrichtung 12 hinter den Zähnen 8. Bei dem Ausführungsbeispiel gemäß Fig. 2 ist es gerade umgekehrt.

Die Fig. 4 bis 6 zeigen verschiedene Querschnittsformen des Sägeblattes. Gemäß Fig. 4 ist das Sägeblatt flach und hat geschränkte Zähne. Gemäß Fig. 5 hat es leicht konvexe Seiten, sodaß auch der Rücken des Sägeblattes geführt ist. Es ist selbstverständlich auch möglich, zur Führung des Rückens diesen zu wellen, wie das bei herkömmlichen Sägeblättern bereits bekannt ist. Gemäß Fig. 6 ist der Querschnitt keilförmig, sodaß die Schneidezähne nicht geschränkt werden müssen.

## Patentansprüche

1. Stichsägeblatt (1) mit Schneidezähnen (5), deren Schnittrichtung (6) zum Schaft (4) des Sägeblattes (1) weist, dadurch gekennzeichnet, daß im Bereich (7) des schaftseitigen Endes des Sägeblattes (1) zusätzlich ein oder mehrere Schneidezähne (8) mitentgegengesetzter Schnittrichtung (9) vorgesehen sind.

2. Stichsägeblatt nach Anspruch 1, dadurch gekennzeichnet, daß die Schneidezähne (5), deren Schnittrichtung (6) zum schaftseitigen Ende des Sägeblattes (1) weist, in bezug auf die Vorschubrichtung (12) des Sägeblattes (1) weiter hinten als die Zähne (8) mit entgegengesetzter Schnittrichtung (9) liegen (Fig. 1)

3. Stichsägeblatt nach Anspruch 1, dadurch gekennzeichnet, daß die Schneidezähne (5), deren Schnittrichtung (6) zum schaftseitigen Ende des Sägeblattes (1) weist, in bezug auf die Vorschubrichtung (12) des Sägeblattes (1) weiter vorne als die Zähne (8) mit entgegengesetzter Schnittrichtung (9) liegen. (Fig. 2)

Fig. 1

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 177 344 (TAI-HER YANG) <br> * Insgesamt, insbesonders Figuren 7,15 * <br> --- | 1 | B 23 D 61/12 <br> B 27 G 19/10 |
| A | FR-A-2 247 322 (MAPATEX ESTABLISHMENT) <br> * Seite 2, Zeilen 37-38; Seite 3, Zeilen 1-4; Figur 1 * <br> --- | 2,3 | |
| A | US-A-1 876 945 (E.W. HUTCHINGS) <br> * Seite 1, Zeilen 63-70; Figur 2 * <br> --- | 1,3 | |
| A | PATENT ABSTRACTS OF JAPAN, Band 4, Nr. 405 (M-23)[587], 26. Juli 1980; & JP-A-55 65 024 (TOSHIBA KIKAI K.K.) 16-05-1980 <br> * Insgesamt * <br> ----- | 1,3 | |

| | RECHERCHIERTE SACHGEBIETE (Int. Cl.4) |
|---|---|
| | B 23 D <br> B 27 B <br> B 27 G |

Der vorliegende Recherchenbericht wurde für alle Patentansprüche erstellt

| Recherchenort | Abschlußdatum der Recherche | Prüfer |
|---|---|---|
| DEN HAAG | 26-01-1989 | MOET H.J.K. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument